Europäisches Patentamt

(19) European Patent Office

Office européen des brevets

(11) Publication number: **0 053 923**
**B1**

(12) **EUROPEAN PATENT SPECIFICATION**

(45) Date of publication of patent specification: **20.03.85**

(51) Int. Cl.⁴: **B 64 D 11/06**

(21) Application number: **81305725.4**

(22) Date of filing: **04.12.81**

(54) **Seat track fitting.**

(30) Priority: **08.12.80 US 214392**

(43) Date of publication of application:
**16.06.82 Bulletin 82/24**

(45) Publication of the grant of the patent:
**20.03.85 Bulletin 85/12**

(84) Designated Contracting States:
**BE DE FR GB IT**

(56) References cited:
**FR-A-2 003 987**
**US-A-3 037 812**
**US-A-3 392 954**
**US-A-3 620 171**
**US-A-3 677 195**
**US-A-4 213 593**

(73) Proprietor: **PTC Aerospace Inc.**
**Bantam Connecticut 06750 (US)**

(72) Inventor: **Long, William Allen**
**Westleigh Drive**
**Harwinton Connecticut (US)**
Inventor: **Fischer, Ward Ellsworth**
**458 North Main Street**
**Torrington Connecticut (US)**
Inventor: **Brunelle, Rene Joseph**
**12 Ivy Lane**
**Wolcott Connecticut (US)**

(74) Representative: **Newby, John Ross et al**
**J.Y. & G.W. Johnson Furnival House 14/18 High**
**Holborn**
**London WC1V 6DE (GB)**

Courier Press, Leamington Spa, England.

## Description

The invention relates to track fittings and particularly to fittings used to attach the rear legs of aircraft passenger seats to slotted seat tracks in the floor of an aircraft. Such track fittings typically include a pair of spaced stud portions which are adapted to enter the seat track through wide openings and then be slid fore or aft by a distance equal to one-half the distance between the centres of the studs so they will underlie retaining lip portions on the seat track. A flanged shear pin is also mounted on the track fitting and is movable vertically so that it will be wholly above the seat track when the stud portions are dropped into the wide slotted openings in the seat track and can be lowered partially into one of the wide openings after the stud portions are slit under the lip portions of the seat track by a distance of one-half the distance between a pair of wide openings. US—A—3620171 discloses a track fitting of this general type.

A track fitting arrangement having a slotted seat track with regularly spaced enlarged portions and lip portions for engagement with a stud carried by the leg of an aircraft seat is shown in U.S.—A—4,213,593. The stud portion is raised for engagement with the underside of the seat track by means of a lever that is pivotally connected to the stud and rotated downwardly. Downward rotation not only locks the stud portion to the track but also allows the lever to be moved into the seat track recess where it is hidden with a separate covering element.

FR—A—2,003,987 discloses a means for lifting a shear pin in a sliding attachment device that is located in a slotted seating track. This device consists of a manually actuable lever having a pair of integral arm sections that straddle a portion of the shear pin and are pivotally attached to the shear pin at the outer end of the arms. The arms extend downwardly forming a cam portion that engages with a contact portion on the body of the device to lift the pin in a sliding fulcrum fashion. However, in such an arrangement the shear pin can be improperly engaged with an unenlarged portion of the seating track and the lifting lever returned to its horizontal position. There would be little visual warning of this dangerous situation due to the direct connection of the lifting lever to the shear pin which minimizes the difference in elevation of the lifting lever during proper and improper engagement of the shear pin.

To prevent rattling of a track fitting, it is known to provide various types of threaded fastener members which will move one portion of the track fitting relative to other portions such that one or more portions will be forced into tight frictional contact with the seat track. In some track fittings it is possible for the shear pin to be lifted and disengaged even though the anti-rattle fastener member is still engaged. This type of track fitting could permit the seat to appear to be firmly anchored to the seat track, but would, of course, easily fail in a crash situation. The situation is especially serious with respect to those track fittings in which the shear pin is at the rear of the track fitting which it would be accessible to a curious passenger who might lift the shear pin from its detented locked position and leave it in its upper unlocked position. Since the anti-rattle fastener member must be accessible to a seat installer, it is often directed to the rear where it can be unsightly to a passenger or where a separate cover member must be provided.

The present invention seeks to provide a track fitting having an improved arrangement for actuating the shear pin which by employing a sliding fulcrum movement between portions on the actuating lever member and the body portion of the track fitting facilitate the locking and unlocking of the fitting in the seat track and provide a fitting in which improper engagement of the shear pin on the track is indicated by the position adopted by the lever member. One additional advantage in some embodiments of track fitting according to the invention is that the actuating lever, which actuates the shear pin, can be formed in a curved manner such that it smoothly recesses into a rearwardly extending lower portion of a uniquely designed seat leg structure with which the improved track fitting may be used, to give a particularly neat appearance to the lower portion of the leg structure.

What constitutes a track fitting in accordance with this invention is set out in the following claim 1.

Desirably the manually actuable lever member has an extended curved upper actuator portion by which it is actuated, the pair of arms, which straddle the sides of the body portion of the track fitting conveniently being pivotally pinned to the shear pin adjacent to the top thereof.

Preferably, as the manually actuable lever approaches its extreme downward position, the pinned ends of the arms move over-centre and cause the cam portion to first slide off the horizontal contact surface and then resiliently wedge against and engage the generally vertical contact surface under the force of the shear pin spring which is now substantially fully compressed. In this position, the shear pin is firmly locked in its upper disengaged position so that the seat can be easily assembled to the seat track and moved so that the stud portions are slid under the lip portions on the seat track to their approximate final position. At this point, the manually actuable lever may be lifted to disengage the over-centre locking of the cam portion and permit the shear pin spring to urge the shear pin downwardly into one of the seat track slots as soon as it becomes aligned with it due to further fore or aft movement of the seat. Portions of the forward surface of the body portion are desirably formed to cooperate with portions of the seat leg and of a cover for the seat track to permit the track fitting to be preassembled to the seat in such a manner that it will remain generally level as the seat is handled before assembly to the seat track.

The invention will now be described, by way of example, with reference to the accompanying drawing, in which:—

Figure 1 is a side view illustrating the relationship between a rear seat leg, a seat retaining track and a track fitting according to the present invention;

Figure 2 is a view similar to Figure 1, but with portions of the leg and seat track broken away;

Figure 3 is a side view of the track fitting of Figure 2 shown in its track-disengaged condition;

Figure 4 is a top view of the track fitting and associated leg in the engaged position shown in Figure 1;

Figure 5 is a view of the track fitting of Figure 1, seen from the right;

Figure 6 is a view taken on line 6—6 of Figure 2; and

Figure 7 is a view taken on line 7—7 of Figure 2.

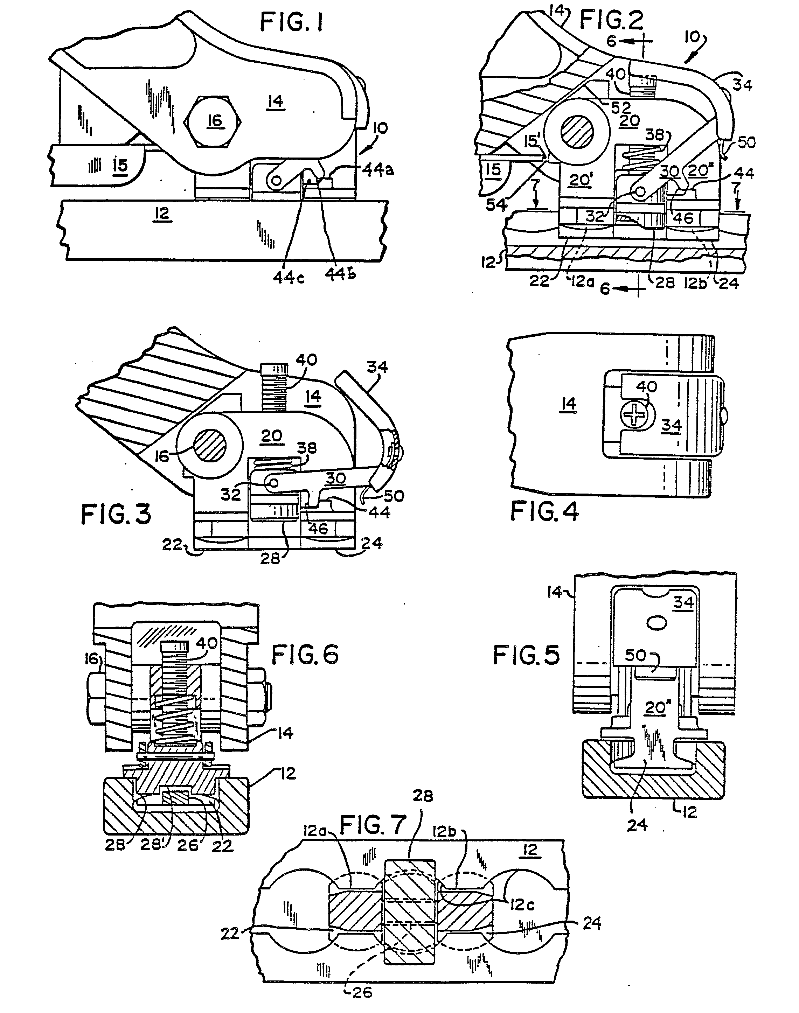

Referring to Figure 1, an improved track fitting according to the invention is indicated generally at 10 in its operative relationship with a seat track 12 and a rear seat leg 14 which is affixed to the fitting 10 by a bolt 16.

The track fitting 10 illustrated is specifically intended for use in an aircraft but its use in other passenger vehicles is not ruled out.

In Figure 2, portions of the seat track 12 and seat leg 14 are removed so as to show the relationship between the internal portions of the leg, a track cover 15 (which is fixed to the seat to overlie the track), the seat track 12 and the track fitting 10. The track fitting 10 has a body portion 20 which may, for example, be made as a stainless steel investment casting. The body portion 20 includes a forward or leading end leg portion 20′ and a rearward or trailing end leg portion 20″ which are formed at their lower ends so as to include respectively, a forward flanged stud portion 22 and a rearward flanged stud portion 24. To increase the strength of the track fitting, the stud portions 22, 24 are preferably connected by an integral web portion 26 which is of a limited height and which, in the operative position of the track fitting 10, is accommodated within a recess 28′ within a movable shear pin 28 as shown in Figure 6. As best seen in Figure 2, the shear pin is adapted to move vertically in an opening defined between the leg portions 20′, 20″ and is retained against sidewise movement out of the opening due to its being pivotally mounted to spaced arms 30 which are pinned to the shear pin 28 by a roll pin 32. The arms 30 are joined at their other ends either by being welded to an actuating lever member 34 or by being formed integrally therewith. A spring 38 is retained within the opening between the leg portions 20′, 20″ by an anti-rattle fastener member 40 which functions to lock the shear pin 28 downwardly in its operative position shown in Figure 2. In this operative position, the shear pin 28 is positioned within an opening 12c (Figure 7) in the seat track 12 after the stud portions 22, 24 have been first dropped through an adjacent pair of openings 12c and then moved fore or aft one-half the distance between adjacent openings 12c so as to be retained under seat track lip portions 12a, 12b.

To move the track fitting 10 relative to a seat track 12, the anti-rattle fastener member 40 must be unscrewed from its Figure 2 locked position, wherein it bears down on the upper end of the shear pin 28, to the relieved position shown in Figure 3, wherein downward movement of the actuating lever 34 in a rocking movement about a projection 44 on the trailing end leg portion 20″ will cause the shear pin 28 to be lifted against the urging of the spring 38. During the lifting movement, a cam portion 46 of each arm 30 which engages the projection 44 will slip down beside the projection as shown in Figure 3 and provide somewhat of an over-centre locking arrangement. In the operative position shown in Figure 2, a leaf spring 50, attached to the actuating lever 34, will contact the body portion 20 and prevent any vibration of the actuating lever 34 from taking place.

The projection 44 for each arm 30 has an upper generally horizontal contact surface 44a (see Figure 1) and a lower generally horizontal contact surface 44c joined by a generally vertical contact surface 44b. These contact surfaces are progressively engaged by the respective cam portion 46 in a sliding fulcrum fashion when the actuating lever 34 is actuated downwardly.

As can be seen in Figures 2 and 3, the actuating lever 34 is positioned in a recessed area of the rear seat leg 14 when in its operative position and functions as a decorative cover for the recess and the fitting. In the operative position, the actuating lever 34 has no accessible portions which a passenger could actuate to release the fitting. A tool such as a screwdriver would have to be used in the space (see Figure 5) between the top of the actuating lever 34 and the portion of the rear seat leg 14 above it to initiate movement of the actuating lever. However, no movement of the actuating lever 34 can take place until the fastener member 40 is screwed upwardly from the locked position shown in Figure 2, where it contacts the shear pin 28, to the unlocked position shown in Figure 3. This is so, since each arm 30 rocks about its cam portion 46 and has its inner end pinned to the shear pin 28.

A particular advantage of a track fitting according to the invention is that the track fitting 10 can anchor itself in the seat track 12. With the shear pin 28 lifted, as shown in Figure 3, the track fitting 10 is inserted in a seat track 12 and the stud portions 22, 24 are slid partially under the retaining lip portions 12a, 12b. The actuating lever 34 is then lifted just enough to release the cam portion 46 from locking engagement with the projection 44. As soon as the seat and the track fitting are slid fore or aft, a sufficient amount to permit the shear pin 28 to be aligned with an opening 12c, the force of the spring 38 will snap the shear pin 28 downwardly into the opening 12c and lift the actuating lever 34 to its Figure 2 position. If the actuating lever 34 is lifted all the way to its upper position before the shear pin 28 is aligned with an opening 12c, it will not be correctly located in its recess in the rear seat leg 14 as shown in Figures 2 and 5. This is a safety feature, since it permits one to determine visually that firm locking has not yet taken place. The presence of the fastener member 40 above the top surface of the rear seat leg 14 also gives a visual indication that the anti-rattle feature has not yet been engaged. As seen in Figure 2, integral projections 52, 54 are preferably formed on the body portion 20. These projections cooperate, respectively, with the rear seat leg 14 and a tab 15' on the track cover 15 to limit rotation of the track fitting 10 relative to the rear seat leg 14 and thus enable the track fitting and seat to be easily assembled as a unit to the seat track 12.

## Claims

1. A track fitting (10) for anchoring a seat to a seat track (12) comprising a body portion (20) having a pair of downwardly depending stud portions (22, 24) adapted to underlie retaining lip portions (12a, 12b) of a seat track (12), an open area between said stud portions, a flanged shear pin (28) mounted for vertical movement in said open area from a downward operative position in which the flange of the shear pin (28) bears on the top of the seat track (12) to an upward inoperative position in which the shear pin (28) is clear of the seat track (12), a spring (38) for normally urging said shear pin (28) downwardly and means (30, 34) for raising the shear pin (28) against the urging of said spring (38), which shear pin raising means comprises a manually actuable lever member (34) having a pair of arms (30) straddling the sides of said body portion (20) and providing a downwardly projecting cam portion (46), the outer ends of said arms being pivotally attached to said shear pin (28), a contact portion (44) on said body portion (20) having contact surfaces (44a, 44b, 44c) which are adapted to be progressively engaged by said cam portion (46) in a sliding fulcrum fashion when said lever member (34) is actuated downwardly to lift the shear pin (28) against the force of said spring (38) from its operative position to its inoperative position, characterised in that said cam portion (46) is located intermediate the ends of the arms (30) for engagement with the contact surfaces, and in that said contact surfaces comprise a generally horizontal contact surface (44a) which is engaged by said cam portion (46) during the initial lifting of the shear pin (28) and a generally vertical contact surface (44b) which is engaged by said cam portion (46) when said shear pin (28) reaches its inoperative position.

2. A track fitting according to claim 1, characterised in that the transition between the generally horizontal (44a) and generally vertical (44b) contact surface is very abrupt and produces an over-centre locking of the shear pin (28) as the cam portion (46) slides off the generally horizontal contact surface (44a) and onto the generally vertical contact surface (44b).

3. A track fitting (10) according to either preceding claim, in which a threaded fastener member (40) is mounted in said body portion (20) for generally vertical movement into and out of contact with said shear pin (28), characterised in that said fastener member (40) in its downward engaged position, causes said body portion (20) to be lifted relative to said shear pin (28) so as to eliminate rattling between the track fitting (10) and a seat track (12) to which it is mounted.

4. A track fitting (10) according to claim 3, characterised in that movement of said fastener member (40) to its engaged position locks said shear pin (28) in its operative position and prevents any downward movement of said lever member (34).

5. A track fitting (10) according to any preceding claim, characterised in that the lever member (34) is received in a recess in a leg (14) of the seat, said lever member (34) being located in said recess flush with a portion of said leg (14) when, and only when, the shear pin (28) is in its downward operative position.

6. A track fitting (10) as claimed in claim 5 when dependent on claim 3 or claim 4, characterised in that the upper end of said fastener member (40) lies below said lever member (34) when the latter is flushly located in said recess and said fastener member (40) is in its downward engaged position.

7. A track fitting (10) as claimed in any preceding claim, characterised in that said body portion (20) is pivotally mounted on a rear seat leg (14) of the seat in a recess in the latter.

8. A track fitting (10) as claimed in claim 7, characterised in that means (52, 54) on the body portion (20) limit the pivoting movement of the latter relative to the seat leg (14) to facilitate mounting of the seat on its seat track (12).

9. A track fitting (10) as claimed in any preceding claim, characterised in that said spaced-apart stud portions (22, 24) are connected by a web portion (26) and in that the shear pin (28) is provided with a recess (28') in its lower end to accommodate said web portion (26) when the shear pin (28) is in its operative position.

## Revendications

1. Organe d'ancrage (10) destiné à ancrer un siège à une glissière de siège (12) comprenant un corps (20) comportant deux tétons (22, 24) orientés vers le bas et propres à être disposés en dessous de lèvres de retenue (12a, 12b) d'une glissière de siège (12), une zone ouverte entre les tétons, une goupille de cisaillement bridée (28) montée de manière à se déplacer verticalement dans la zone ouverte à partir d'une position active dirigée vers le bas, dans laquelle la bride de la goupille de cisaillement (28) appuie sur le dessus de la glissière de siège (12) vers une position inactive dirigée vers le haut, dans laquelle la goupille de cisaillement (28) est dégagée de la glissière de siège (12), un ressort (38) pour solliciter normalement la goupille de cisaillement (28) vers le bas et un dispositif (30, 34) pour soulever la goupille de cisaillement (28) à l'encontre de la sollicitation du ressort (38), le dispositif de soulèvement de la goupille de cisaillement comprenant un levier pouvant être actionné à la main (34) comportant deux bras (30) qui chevauchent les côtés du corps (20) et qui forment une partie de came (46) en saillie vers le bas, les extrémités externes des bras étant articulées à la goupille de cisaillement (28), une partie de contact (44) sur le corps (20) comportant des surfaces de contact (44a, 44b, 44c) qui peuvent être engagées progressivement par la partie de came (46) à la façon d'un point d'appui coulissant lorsque le levier (34) est actionné vers le bas pour soulever la goupille de cisaillement (28) à l'encontre de la sollicitation du ressort (38) à partir de sa position active vers sa position inactive, caractérisé en ce que la partie de came (46) est placée entre les extrémités des bras (30) afin de venir en contact avec les surfaces de contact et en ce que ces surfaces de contact comprennent une surface de contact dans l'ensemble horizontale (44a) qui est attaquée par la partie de came (46) pendant le soulèvement initial de la goupille de cisaillement (28) et une surface de contact (44b) dans l'ensemble verticale qui est engagée dans la partie de came (46) lorsque la goupille de cisaillement (28) atteint sa position inactive.

2. Organe d'ancrage suivant la revendication 1, caractérisé en ce que la transition entre la surface de contact (44a) dans l'ensemble horizontale et la surface de contact (44b) dans l'ensemble verticale, est très abrupte et produit un verrouillage à dépassement de centre de la goupille de cisaillement (28) lorsque la partie de came (46) glisse de la surface de contact dans l'ensemble horizontale (44a) et passe sur la surface de contact dans l'ensemble verticale (44b).

3. Organe d'ancrage (10) suivant l'une ou l'autre des revendications précédentes, dans lequel un organe d'assemblage fileté (40) est monté dans le corps (20) de manière à se déplacer dans l'ensemble verticalement en contact avec la goupille de cisaillement (28) et hors de contact d'avec celle-ci, caractérisé en ce que l'organe d'assemblage (40), dans sa position engagée vers le bas, provoque le soulèvement du corps (20) par rapport à la goupille de cisaillement (28) de manière à éliminer le cliquetis entre l'organe d'ancrage (10) et une glissière de siège (12) sur laquelle il est monté.

4. Organe d'ancrage (10) suivant la revendication 3, caractérisé en ce que le déplacement de l'organe d'assemblage (40) vers sa position engagée verrouille la goupille de cisaillement (28) dans sa position active et empêche tout déplacement vers le bas du levier (34).

5. Organe d'ancrage (10) suivant l'une quelconque des revendications précédentes, caractérisé en ce que le levier (34) est reçu dans un évidement prévu dans un pied (14) du siège, le levier (34) étant placé dans l'évidement au ras d'une partie du pied (14) lorsque, et uniquement lorsque, la goupille de cisaillement (28) se trouve dans sa position inférieure active.

6. Organe d'ancrage (10) suivant la revendication 5 découlant de la revendication 3 ou de la revendication 4, caractérisé en ce que l'extrémité supérieure de l'organe d'assemblage (40) est située en dessous du levier (34) lorsque ce dernier est engagé dans l'évidement au ras de celui-ci et que l'organe d'assemblage (40) se trouve dans sa position engagée vers le bas.

7. Organe d'ancrage (10) suivant l'une quelconque des revendications précédentes, caractérisé en ce que le corps (20) est monté à pivot sur un pied postérieur (14) du siège dans un évidement de celui-ci.

8. Organe d'ancrage (10) suivant la revendication 7, caractérisé en ce que des moyens (52, 54) sur le corps (20) limitent le mouvement de pivotement de ce corps par rapport au pied (14) du siège pour faciliter le montage du siège sur sa glissière (12).

9. Organe d'ancrage (10) suivant l'une quelconque des revendications précédentes, caractérisé en ce que les tétons espacés (22, 24) sont reliés par une bande (26) et en ce que la goupille de cisaillement (28) est pourvue d'un évidement (28') dans son extrémité inférieure destinée à recevoir la bande (26) lorsque la goupille de cisaillement (28) se trouve dans sa position active.

**Patentansprüche**

1. Ein Sitzbefestigungsorgan (10) für die Verankerung eines Sitzes an einer Sitzschiene (12), bestehend aus einem Körperstück (20) mit einem für die Untergreifung von Haltelippen (12a, 12b) einer Sitzschiene (12) ausgeführten Paar von nach unten herabhängenden Stiftstücken (22, 24), einem freien Bereich zwischen den genannten Stiftstücken, einem mit Bund versehenen Scherbolzen (28) für die Durchführung einer vertikalen Bewegung in dem genannten freien Bereich aus einer Betriebsstellung unten, in der der Bund des Scherbolzens (28) auf der Oberseite der Sitzschiene (12) aufliegt, in eine Ruhestellung oben, in der der Scherbolzen (28) außer Berührung mit der Sitzschiene (12) ist, einer Feder (38), um den genannten Scherbolzen (28) normalerweise niederzuhalten, und einem Mittel (30, 34) zum Anheben des Scherbolzens (28) gegen den Druck der genannten Feder (38), welches sich zusammensetzt aus einem von Hand zu betätigenden Hebelteil (34) mit einem Paar Armen (30), die an den Seiten des genannten Körperstücks (20) vorbeigehen und einen nach unten hervorstehenden Nokken (46) aufweisen, wobei die äußeren Enden der genannten Arme drehbar an dem genannten Scherbolzen (28) befestigt sind, einem Kontaktstück (44) an dem genannten Körperstück (20) mit Kontaktflächen (44a, 44b, 44c), die so ausgeführt sind, daß sie vom genannten Nocken (46) in gemäß dem Drehpunkt gleitender Weise progressiv erfaßt werden, wenn das genannte Hebelstück (34) zum Anheben des Scherbolzens (28) gegen die Kraft der genannten Feder aus der Betriebsstellung in die Ruhestellung nach unten betätigt wird, dadurch gekennzeichnet, daß der genannte Nocken (46) zur Erfassung der Kontaktflächen in der Mitte zwischen den Enden der Arme (30) angeordnet ist und die genannte Kontaktfläche aus einer allgemein horizontalen Kontaktfläche (44a), die vom genannten Nocken (46) bei Beginn des Anhebens des Scherbolzens (28) erfaßt wird, und einer allgemein vertikalen Kontaktfläche (44b), die vom genannten Nocken (46) erfaßt wird, wenn der genannte Scherbolzen (28) seine Ruhestellung erreicht, besteht.

2. Ein Sitzbefestigungsorgan gemäß Anspruch 1, dadurch gekennzeichnet, daß der Übergang zwischen der allgemein horizontalen (44a) und der allgemein vertikalen (44b) Kontaktfläche sehr schroff ist und beim Abgleiten des Nockens (46) von der allgemein horizontalen Kontaktfläche (44a) auf die allgemein vertikale Kontaktfläche (44b) eine Arretierung des Scherbolzens (28) über der Mitte bewirkt.

3. Ein Sitzbefestigungsorgan (10) gemäß den beiden vorhergehenden Ansprüchen, bei dem ein mit Gewinde versehenes Verbindungselement (40) für die Durchführung einer allgemein vertikalen Bewegung zur Herstellung und Lösung von Kontakt mit dem genannten Scherbolzen (28) in dem genannten Körperstück (20) vorgesehen ist, dadurch gekennzeichnet, daß das genannte Verbindungselement (40) in seiner Abwärtskontaktstellung eine zum Scherbolzen (28) relative Anhebung des genannten Körperstücks (20) bewirkt, so daß ein Klappern zwischen dem Sitzbefestigungsorgan (10) und einer Sitzschiene (12), an der es angebracht ist, ausgeschaltet wird.

4. Ein Sitzbefestigungsorgan (10) gemäß Anspruch 3, dadurch gekennzeichnet, daß durch die Bewegung des genannten Verbindungselements (40) in seine Kontaktstellung der genannte Scherbolzen (28) in seiner Betriebsstellung arretiert und eine Abwärtsbewegung des genannten Hebelstücks (34) verhindert wird.

5. Ein Sitzbefestigungsorgan (10) gemäß ir-gendeinem der vorstehenden Ansprüche, da-durch gekennzeichnet, daß das Hebelstück (34) in einer Ausnehmung in einem Bein (14) des Sitzes aufgenommen wird, wobei sich das genannte Hebelstück (34) bündig mit einem Teil des genannten Beines (14) in genannter Ausnehmung befindet, wenn und nur wenn sich der Scherbolzen (28) in seiner Abwärtsbetriebsstellung befindet.

6. Ein Sitzbefestigungsorgan (10) gemäß Anspruch 5 unter Abhängigkeit von Anspruch 3 oder Anspruch 4, dadurch gekennzeichnet, daß das obere Ende des genannten Verbindungselements (40) unter dem genannten Hebelstück (34) liegt, wenn sich diese letztere bündig in der genannten Ausnehmung und das genannte Verbindungselement (40) in seiner Abwärtskontaktstellung befindet.

7. Ein Sitzbefestigungsorgan (10) gemäß ir-gendeinem der vorstehenden Ansprüche, da-durch gekennzeichnet, daß das genannte Körperstück (20) an einem hinteren Bein (14) des Sitzes in einer Ausnehmung desselben drehbar gelagert ist.

8. Ein Sitzbefestigungsorgan (10) gemäß Anspruch 7, dadurch gekennzeichnet, daß durch das Mittel (52, 54) am Körperstück (20) die Drehbewegung desselben relativ zum Sitzbein (14) begrenzt wird, um ein Aufsetzen des Sitzes auf die Sitzschiene (12) zu erleichtern.

9. Ein Sitzbefestigungsorgan (10) gemäß ir-gendeinem der vorstehenden Ansprüche, da-durch gekennzeichnet, daß die genannten, mit Abstand voneinander angeordneten Stiftstücke (22, 24) durch einen Stegteil (26) verbunden sind und der Scherbolzen (28) in seinem unteren Ende mit einer Ausnehmung (28') versehen ist, um den genannten Stegteil (26) aufzunehmen, wenn sich der Scherbolzen (28) in seiner Betriebsstellung befindet.

0 053 923

FIG.1

FIG.2

FIG.3

FIG.4

FIG.6

FIG.5

FIG.7